# EUROPÄISCHE PATENTANMELDUNG

(11) **EP 2 530 933 A2**
(43) Veröffentlichungstag der Anmeldung: **05.12.2012**
(21) Anmeldenummer: 12003711.4
(22) Anmeldetag: 10.05.2012
(51) Int. Cl.: H04N 5/77, H04N 5/63, H04N 5/907

(54) **Bildaufzeichnungs- und Abspeicherungsgerät**

(30) Priorität: 01.06.2011 DE 102011103178
(71) Anmelder: ABB AG, 68128 Mannheim (DE)
(72) Erfinder: Müller, Andreas, 64683 Einhausen (DE)

(57) **Zusammenfassung**

Es wird ein Bildaufzeichnungs- und Abspeicherungsgerät in Form eines in eine normgerechte UP-Gerätedose montierbaren Unterputz-Installationsgerätes (1) mit UP-Gerätesockel (3), Zentralscheibe (4) sowie Abdeckrahmen (5) vorgeschlagen,
• mit einem Netzteil (7) inklusive Anschluss an eine externe Spannungsversorgung (8),
• mit einer Verarbeitungselektronik (9), an welche ein Kameramodul (10) inklusive einer Optik sowie ein Datenspeicher (12, 13+14) angeschlossen sind,
• wobei das Kameramodul (10) Bildaufzeichnungen der Umgebung des Installationsgerätes (1) für die Abspeicherung im Datenspeicher (12, 13+14) erzeugt.

## Beschreibung

Die Erfindung betrifft ein Bildaufzeichnungs- und Abspeicherungsgerät.

Zur Überwachung von Wohn- und oder Flurbereichen sind Bewegungsmelder mit integrierten Kamerasystemen allgemein bekannt, welche die aufgenommenen Bilder in der Regel drahtgebunden oder per Funk an ein entsprechendes Aufzeichnungsgerät übertragen. Auch sind Geräte allgemein bekannt die die erfassten Informationen (Bildaufzeichnungen) lokal auf einer Speicherkarte aufzeichnen und speichern.

Dabei ist es von Nachteil, dass diese vorgenannten allgemein bekannte Geräte vergleichsweise auffällig und leicht zu erkennen / aufzufinden und deshalb beispielsweise von Einbrechern / Dieben auch leicht außer Gefecht zu setzen sind. Darüber hinaus wird für derartige Geräte in der Regel eine entsprechende Stromversorgung benötigt, die ebenfalls ins Auge sticht und mit vergleichsweise hohem zusätzlichem Verkabelungsaufwand vorzusehen ist.

Der Erfindung liegt die Aufgabe zugrunde, eine unauffällige und in die reguläre Haus- und Gebäudeinstallation integrierbare Überwachungsmöglichkeit von insbesondere Innenräumen zu schaffen, welche zudem mit einem vergleichsweise geringen Aufwand realisierbar ist.

Diese Aufgabe wird erfindungsgemäß gelöst durch ein Bildaufzeichnungs- und Abspeicherungsgerät in Form eines in eine normgerechte UP-Gerätedose montierbaren Unterputz-Installationsgerätes mit UP-Gerätesockel, Zentralscheibe sowie Abdeckrahmen,
- mit einem Netzteil inklusive Anschluss an eine externe Spannungsversorgung,
- mit einer Verarbeitungselektronik, an welche ein Kameramodul inklusive einer Optik sowie ein Datenspeicher angeschlossen sind,
- wobei das Kameramodul Bildaufzeichnungen der Umgebung des Installationsgerätes für die Abspeicherung im Datenspeicher erzeugt.

Vorteilhaft wird ein "Unterputzeinsatz mit Kameraüberwachungsfunktion" zur Überwachung von im Wesentlichen Innen- und Wohnbereichen vorgeschlagen, welcher sich einerseits nahtlos und unauffällig in bestehende Haus- und Gebäudeinstallationselemente einreiht und integriert und andererseits hinreichende gute Bildaufzeichnungen für die Überwachung liefert, die beispielsweise zur polizeilichen Identifikation von Dieben und Einbrechern verwendet werden können.

Vorteilhaft kann dabei als Datenspeicher ein Speicherkarten-Schreib-/Lesegerät inklusive eingebrachter Speicherkarte - vorzugsweise Micro-SD-Karte - eingesetzt sein. Alternativ oder zusätzlich ist es möglich, einen USB-Anschluss für den Zugriff auf den Datenspeicher vorzusehen.

Des Weiteren können in Abhängigkeit von der ins Auge gefassten konkreten Anwendung eine Busanbindung und/eine Funk-Übertragungseinheit und/oder eine IR-Übertragungseinheit für den Zugriff auf den Datenspeicher und für Einstellzwecke vorgesehen sein.

Zweckmäßig ist eine Einstelleinheit mit mindestens einem Einstellelement an die Verarbeitungselektronik angeschlossen, um derart beispielsweise Zeitvorgaben einstellen zu können und das Gerät einzuschalten oder auszuschalten.

Mit Vorteil kann ein Bewegungsmelder an die Verarbeitungselektronik angeschlossen sein, um derart ein ereignisgesteuertes Einschalten und Ausschalten von Bildaufzeichnungen zu realisieren. Wird eine sich bewegende "Wärmequelle" - d. h. eine Person - detektiert, so wird die Bildaufzeichnung gestartet. Das Ausschalten der Bildaufzeichnung erfolgt dann automatisch nach Ablauf einer eingestellten Ausschaltverzögerung.

Des Weiteren kann ein Schaltausgang an die Verarbeitungselektronik angeschlossen sein. Dies ermöglicht, zusätzlich beim Einschalten einer Bildaufzeichnung beispielsweise auch ein Leuchtmittel einzuschalten, um hierdurch die Qualität der Bildaufzeichnung zu erhöhen. Beispielsweise ist das an den Schaltausgang angeschlossene Leuchtmittel in Form eines IR-Leuchtmittel ausgebildet, um die Bildaufzeichnungen in unauffälliger Weise durchführen zu können. Allgemein kann das Leuchtmittel entweder selbst im elektronischen Gerät integriert oder in Form eines separaten Gerätes ausgebildet sein. Bei Detektion einer sich bewegenden Wärmequelle mittels des Bewegungsmelders erfolgt vorzugsweise unabhängig von der aktuellen Helligkeit stets eine Abspeicherung der Bildaufzeichnungen im Datenspeicher, während die Zuschaltung des Leuchtmittels nur bei geringer Helligkeit erfolgt.

Des Weiteren kann z. B. die Betätigung eines Lichtschalters für eine Treppenhausbeleuchtung oder Flurbeleuchtung / Wohnungsbeleuchtung mit der zu startenden Bildaufzeichnung gekoppelt werden, was aufgrund der verbesserten Ausleuchtung vorteilhaft die Bildqualität verbessert.

Zusätzlich kann ein Mikrofon an die Verarbeitungselektronik angeschlossen sein, wodurch zusätzlich zu den Bildaufzeichnungen auch jeweils zugeordnete Tonaufzeichnungen erzeugt werden.

Die vorliegende Erfindung umfasst dabei auch beliebige Kombinationen bevorzugter Ausführungsformen des Bildaufzeichnungs- und Abspeicherungsgerätes respektive elektronischen Installationsgerätes sowie einzelne Ausgestaltungsmerkmale oder Weiterbildungen, sofern diese sich nicht gegenseitig ausschließen.

Die Erfindung wird nachstehend an Hand der in der Zeichnung dargestellten Ausführungsbeispiele erläutert. Es zeigen:
- Fig. 1: eine prinzipielle elektrische Schaltskizze des Bildaufzeichnungs- und Abspeicherungsgerätes respektive elektronischen Installationsgerätes,
- Fig. 2: eine Ausführungsform des elektronischen Installationsgerätes mit Speicherkarten-Schreib-/Lesegerät und Speicherkarte,
- Fig. 3: eine Ausführungsform des elektronischen Installationsgerätes mit USB-Anschluss,
- Fig. 4: eine Ausführungsform des elektronischen Installationsgerätes mit Busanbindung,
- Fig. 5: eine Ausführungsform des elektronischen Installationsgerätes mit Funk-Übertragungseinheit,
- Fig. 6: eine Ausführungsform des elektronischen Installationsgerätes mit IR-Übertragungseinheit,
- Fig. 7: eine Sicht auf eine Ausführungsform des elektronischen Installationsgerätes mit Speicherkarten-Schreib-/Lesegerät und Speicherkarte,
- Fig. 8: eine Sicht auf eine Ausführungsform des elektronischen Installationsgerätes mit Speicherkarten-Schreib-/Lesegerät und Speicherkarte sowie Leuchtmittel,
- Fig. 9: eine Sicht auf eine Ausführungsform des elektronischen Installationsgerätes mit USB-Anschluss,
- Fig. 10: eine Sicht auf eine Ausführungsform des elektronischen Installationsgerätes mit USB-Anschluss sowie Leuchtmittel,
- Fig. 11: einen seitlichen Schnitt durch ein elektronisches Installationsgerät mit den interessierenden Baueinheiten,
- Fig. 12: eine Ausführungsform des elektronischen Installationsgerätes mit Bewegungsmelder.

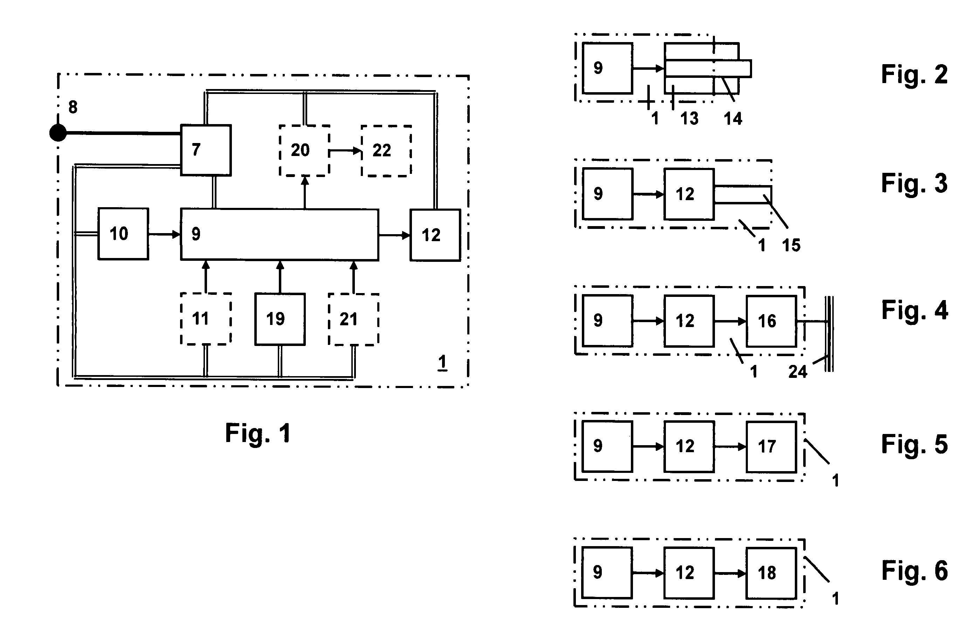

In Fig. 1 ist eine prinzipielle elektrische Schaltskizze des Bildaufzeichnungs- und Abspeicherungsgerätes respektive elektronischen Installationsgerätes dargestellt. Das elektronische Unterputz-Installationsgerät 1 besitzt eine Verarbeitungselektronik 9, an welche angeschlossen sind:
- ein Kameramodul 10, vorzugsweise CCD-Kameramodul, inklusive Optik,
- optional ein Mikrofon 11, d. h. das elektronische Installationsgerät 1 kann mit oder ohne Mikrofon 11 ausgestattet sein,
- ein Datenspeicher 12,
- eine Einstelleinheit 19 mit mindestens einem Einstellelement, welches z. B. zum Einschalten / Ausschalten des Installationsgerätes 1 sowie zur Einstellung von Zeitvorgaben dient, dabei kann diese Einstelleinheit 19 prinzipiell auch via Funk oder via IR-Signal bedienbar sein,
- optional mindestens ein Schaltausgang 20, welcher z. B. zum Einschalten /Ausschalten eines innerhalb des Unterputz-Installationsgerätes 1 (internen) oder außerhalb des Installationsgerätes 1 (externen) Leuchtmittels 22, vorzugsweise IR-Leuchtmittels (Infrarot) dient,
- optional ein Bewegungsmelder 21.

Ein Netzteil 7 mit Anschluss 8 an eine externe Spannungsversorgung (z. B. 230V-Wechselspannungsnetz) oder an ein Bussystem, wie PoE, KNX dient zur Energieversorgung der elektrischen/elektronischen Baukomponenten, wie Verarbeitungselektronik 9, Kameramodul 10, Mikrofon 11, Datenspeicher 12, Einstelleinheit 19, Schaltausgang 20 - gegebenenfalls mit daran angeschlossenem Leuchtmittel 22 - und Bewegungsmelder 21.

Die Verarbeitungselektronik 9 kann dafür ausgelegt sein, in verschiedenen Modi zu arbeiten. Beispielsweise können, einmal aktiviert, vom Kameramodul 10 sowohl Bildaufzeichnungen in Form einzelner "Schnappschüsse" (Einzelbilder) als auch in Form von Filmsequenzen erfassbar und speicherbar sein.

Um die begrenzte Speicherkapazität beispielsweise einer als lokaler Datenspeicher dienenden Flash-Karte besser nutzen zu können, kann die jeweilige Aufnahmefunktion durch einen im elektronischen Installationsgerät 1 selbst integrierten Bewegungsmelder 21 ereignisgesteuert ausgelöst werden. Werden keinerlei Bewegungen mehr registriert, fährt die Verarbeitungselektronik 9 der Kameraüberwachungsfunktion in einen "Ruhemodus".

Um die Aufnahmequalität zu verbessern kann das elektronische Installationsgerät 1 darüber hinaus noch mindestens ein Leuchtmittel 22, vorzugsweise IR-Leuchtmittel aufweisen, um auch bei Dunkelheit vergleichsweise hochqualitative Aufnahmen machen zu können. Alternativ kann auch ein weiteres separates Installationsgerät mit einem Leuchtmittel 22, beispielsweise IR-Leuchtmittel zur Ausleuchtung eines Flures, Treppenhauses oder Zimmers vorgesehen und an den Schaltausgang 20 angeschlossen sein.

Zusätzlich zur optischen Kameraüberwachungsfunktion kann zudem noch das Mikrofon 11 vorgesehen sein, mit welchem zusätzliche Tonaufzeichnungen und akustische Überwachungen möglich sind. Diese zusätzlichen Tonaufzeichnungen können als zusätzliche Überwachungsinformation oder zum Gegencheck und zur Vermeidung von Fehlalarmen dienlich sein.

In Fig. 2 ist eine Ausführungsform des elektronischen Installationsgerätes mit Speicherkarten-Schreib-/Lesegerät und Speicherkarte dargestellt. Bei dieser Ausführungsform wird der Datenspeicher 12 gemäß Fig. 1 durch ein an die Verarbeitungselektronik 9 angeschlossenes Speicherkarten-Schreib-/Lesegerät 13 gebildet, in welches eine Speicherkarte 14 eingesteckt ist. Vorzugsweise handelt es sich dabei um eine Micro-SD-Karte. Dabei kann die Überwachungsfunktion der Kamera beispielsweise durch Einsetzen der Speicherkarte 14 automatisch ausgelöst / aktiviert werden, wobei auch eine Zeitverzögerung berücksichtigt werden kann. Des Weiteren kann die Überwachungsfunktion der Kamera aktiviert werden:
- durch Betätigung eines am Gerät vorgesehen Schalters,
- durch eine Fernbetätigung mittels IR-Signal oder Funksignal.

Die jeweilige Aufnahme (Schnittstelle zum Einsetzen der Karte) für die Speicherkarte 14 ist dabei zweckmäßig so angeordnet, dass die Speicherkarte 14 bei (in einer UP-Gerätedose) eingebautem elektronischem Installationsgerät 1 noch zugänglich ist und beispielsweise nach vorne aus dem Installationsgerät 1 genommen werden kann. Dies kann beispielsweise durch einen entsprechenden Kartenschacht, wie bei einem Fotoapparat oder einer Videokamera, realisiert werden. Nach Entnahme der Speicherkarte 14 kann die getätigte Bildaufzeichnung über die Speicherkarte 14 an einen externen Rechner (PC, Laptop usw.) übertragen und dort zur Anzeige gebracht werden.

In Fig. 3 ist eine Ausführungsform des elektronischen Installationsgerätes 1 mit USB-Anschluss dargestellt. Bei dieser Ausführungsform ist der an die Verarbeitungselektronik 9 angeschlossene Datenspeicher 12 mit einem einen Zugriff auf den Speicherinhalt (Bildaufzeichnungen) ermöglichenden USB-Anschluss 15 beschaltet. Auf diese Weise kann die Bildaufzeichnung über ein gebräuchliches USB-Kabel an einen externen Rechner (PC, Laptop usw.) übertragen und dort zur Anzeige gebracht werden.

In Fig. 4 ist eine Ausführungsform des elektronischen Installationsgerätes 1 mit Busanbindung dargestellt. Bei dieser Ausführungsform ist der an die Verarbeitungselektronik 9 angeschlossene Datenspeicher 12 mit einer Busanbindung 16 verbunden, welche ihrerseits an ein Bussystem 24 der Gebäudesystemtechnik - wie PoE oder KNX - angeschlossen ist.

Bei Anschluss des elektronischen Unterputz-Installationsgeräts 1 an das Bussystem 24 (Hausbus, PoE, KNX) kann die Speicherung der aufgezeichneten Informationen (Bildaufzeichnungen, eventuell zusätzlich Tonaufzeichnungen) auch auf dem zentralen Hausdatenspeicher des Bussystems 24 erfolgen. Die Energieversorgung des Installationsgerätes 1 kann aus dem Bussystem 24 erfolgen - siehe Anschluss 8, d. h. die Zugänglichkeit zu einem 230V-Wechselspannungsnetz ist nicht mehr erforderlich. In Fig. 5 ist eine Ausführungsform des elektronischen Installationsgerätes mit Funk-Übertragungseinheit (Funkmodul) dargestellt. Bei dieser Ausführungsform ist der an die Verarbeitungselektronik 9 angeschlossene Datenspeicher 12 mit einer Funk-Übertragungseinheit 17 verbunden, mit welcher die erfassten Bildaufzeichnungen in Form von Einzelbildern oder Filmsequenzen an eine entfernte Aufzeichnungsstation übertragbar sind. Die Funkübertragung dabei kann beispielsweise an einen externen Rechner (PC, Laptop usw.) gemäß dem Bluetooth-Standard erfolgen. Des Weiteren ist unter Einsatz der Funk-Übertragungseinheit 17 auch eine Fernbedienung des elektronischen Installationsgerätes 1 mit einer Funk-Fernbedienung möglich, d. h. das elektronische Installationsgerät 1 kann mit Hilfe von Funk-Signalen eingeschaltet oder ausgeschaltet werden und es können gewünschte Einstellungen erfolgen.

In Fig. 6 ist eine Ausführungsform des elektronischen Installationsgerätes mit IR-Übertragungseinheit dargestellt. Bei dieser Ausführungsform ist der an die Verarbeitungselektronik 9 angeschlossene Datenspeicher 12 mit einer IR-Übertragungseinheit 18 verbunden, mit welcher die erfassten Bildaufzeichnungen in Form von Einzelbildern oder Filmsequenzen an eine entfernte Aufzeichnungsstation, beispielsweise einen externen Rechner (PC, Laptop usw.) übertragbar sind. Des Weiteren ist unter Einsatz der IR-Übertragungseinheit 18 auch eine Fernbedienung des elektronischen Installationsgerätes 1 mit einer IR-Fernbedienung möglich, d. h. das elektronische Installationsgerät 1 kann mit Hilfe von IR-Signalen eingeschaltet oder ausgeschaltet werden und es können gewünschte Einstellungen erfolgen.

Zusammenfassend nachfolgend unterschiedliche, mittels der Verarbeitungselektronik 9 realisierbare Modi zur Erstellung von Bildaufzeichnungen:
- Bei beispielsweise mittels des Bewegungsmelders 21 bei Detektion einer Person ausgelöster Kameraüberwachungsfunktion erfolgt die Bildaufzeichnung für ein jeweils vorbestimmbares Zeitintervall, beispielsweise ungefähr fünf Minuten,
- Bei beispielsweise mittels des Bewegungsmelders 21 bei Detektion einer Person ausgelöster Kameraüberwachungsfunktion erfolgt die Bildaufzeichnung, bis das Speichermedium voll ist.
- Es erfolgt eine permanente Bildaufzeichnung, wobei die Datenkapazität des Datenspeichers 12 derart bemessen ist, dass beispielsweise eine kontinuierliche Bildaufzeichnung über vierundzwanzig Stunden oder auch mehrere Tage möglich ist und bei vollem Speicher ein automatisches Überschreiben der abgespeicherten Daten (z. B. des Vortages) erfolgt. Auf diese Art und Weise kann zu jedem beliebigen Zeitpunkt stets die Bildaufzeichnung der letzten vierundzwanzig Stunden oder der letzten Tage eingesehen werden.

- Für eine Bildaufzeichnung können in den betrachteten Fällen Einzelbilder in vorgegebenen Zeitabständen aufgenommen werden.
- Für eine Bildaufzeichnung können in den betrachteten Fällen Filmsequenzen aufgenommen werden.

Für die Bildaufzeichnungen gilt allgemein, dass den Aufzeichnungen zweckmäßig stets Datum und Uhrzeit (Zeitstempel) zugeordnet werden, um eine nachträgliche Dokumentation aufgezeichneter Ereignisse realisieren zu können. Wird das Bildaufzeichnungs- und Abspeicherungsgerät im Zusammenhang mit einem Bussystem eingesetzt, kann das Bussystem diese Aufgabe (Zeitstempel) übernehmen.

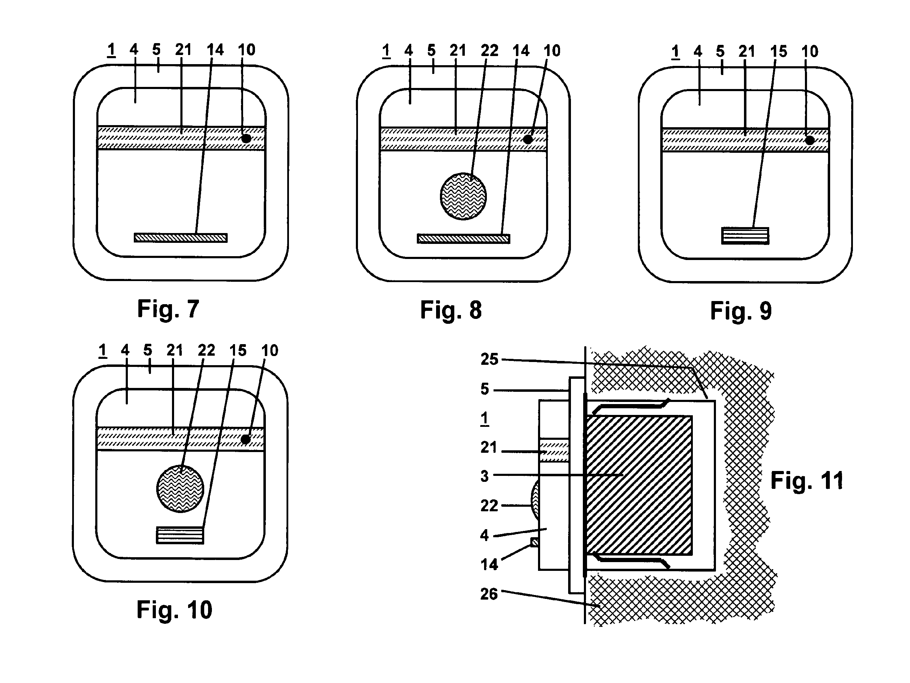

In Fig. 7 ist eine Sicht auf eine Ausführungsform des elektronischen Installationsgerätes mit Speicherkarten-Schreib-/Lesegerät und Speicherkarte dargestellt. Dabei sind als Baueinheiten des elektronischen Installationsgerätes 1 zu erkennen:
- eine Zentralscheibe 4, in welche die Optik des Bewegungsmelders 21, die Optik des Kameramoduls 10 sowie eine Führung des Speicherkarten-Schreib- /Lesegerätes zum Einstecken der Speicherkarte 14 integriert sind,
- ein Abdeckrahmen 5.

Die Fig. 7 zeigt, dass sich zur Tarnung bei entsprechender Transparenz und Farbgebung die Optik des Kameramoduls 10 auch in die Optik des Bewegungsmelders 21 integrieren lässt. Eine Kameraöffnung von nur wenigen Millimetern ist dabei ausreichend. Durch geeignete Wahl eines entsprechenden (Weitwinkel-) Objektivs beziehungsweise einer entsprechenden Linse oder Optik ist die erforderliche Bildqualität unter Berücksichtigung des zu überwachenden Ausschnitts eines Raumes sichergestellt.

In Fig. 8 ist eine Sicht auf eine Ausführungsform des elektronischen Installationsgerätes mit Speicherkarten-Schreib-/Lesegerät und Speicherkarte sowie Leuchtmittel dargestellt. Dabei sind als Baueinheiten zu erkennen:
- eine Zentralscheibe 4, in welche die Optik des Bewegungsmelders 21, die Optik des Kameramoduls 10, eine Führung zum Einstecken der Speicherkarte 14 sowie das Leuchtmittel 22, vorzugsweise IR-Leuchtmittel, integriert sind,
- ein Abdeckrahmen 5.

In Fig. 9 ist eine Sicht auf eine Ausführungsform des elektronischen Installationsgerätes mit USB-Anschluss dargestellt. Dabei sind als Baueinheiten zu erkennen:
- die Zentralscheibe 4, in welche die Optik des Bewegungsmelders 21, die Optik des Kameramoduls 10 sowie der USB-Anschluss 15 integriert sind,
- der Abdeckrahmen 5.

In Fig. 10 ist eine Sicht auf eine Ausführungsform des elektronischen Installationsgerätes mit USB-Anschluss sowie Leuchtmittel dargestellt. Dabei sind als Baueinheiten zu erkennen:
- die Zentralscheibe 4, in welche die Optik des Bewegungsmelders 21, die Optik des Kameramoduls 10, der USB-Anschluss 15 sowie das Leuchtmittel 22, vorzugsweise IR-Leuchtmittel, integriert sind,
- der Abdeckrahmen 5.

In Fig. 11 ist ein seitlicher Schnitt durch ein elektronisches Installationsgerät mit den interessierenden Baueinheiten dargestellt. Es ist eine in einer Wand 26 montierte handelsübliche (normgerechte) UP-Gerätedose 25 gezeigt. Dabei sind als Baueinheiten des elektronischen Installationsgeräts 1 zu erkennen:
- ein UP-Gerätesockel 3 (Unterputzeinsatz) inklusive Tragring und Spreizen zur Verankerung in der UP-Gerätedose 25, wobei vorzugsweise das Netzteil 7 sowie der Anschluss 8 im UP-Gerätesockel 3 integriert sind, des Weiteren optional die Busanbindung 16 und/oder der Schaltausgang 20,
- die Zentralscheibe 4, in welche der Bewegungsmelder 21 inklusive Optik, die Führung zum Einstecken der Speicherkarte 14 sowie das Leuchtmittel 22, vorzugsweise IR-Leuchtmittel, integriert sind, des Weiteren vorzugsweise auch die nicht dargestellten Baukomponenten, wie Verarbeitungselektronik 9, Kameramodul 10 inklusive Optik, Mikrofon 11, Speicherkarten-Schreib-/Lesegerät 13 oder allgemeiner ausgedrückt der Datenspeicher 12, Einstelleinheit 19, gegebenenfalls Funk-Übertragungseinheit 17 oder IR-Übertragungseinheit 18,
- der Abdeckrahmen 5.

Selbstverständlich sind die beiden Baueinheiten Gerätessockel 3 und hiervon separierbare Zentralscheibe 4 mittels Spannungsschnittstellen und Datenschnittstellen - Steckkontakte und hierzu korrespondierende Kupplungsbuchsen - miteinander verbindbar. Die Einstelleinheit 19 mit ihren Einstellelementen ist beispielsweise nach Trennung beider Baueinheiten in einfacher Art und Weise zugänglich.

Die konkrete Auswahl der Ausführungsart (Design) der Zentralscheibe 4 sowie des Abdeckrahmens 5 des elektronischen Installationsgerätes 1 kann nach Wunsch aus unterschiedlichen Installationsgeräte-Programmen mit unterschiedlichem Design und unterschiedlicher Farbgebung erfolgen. Derartige Unterputzprogramme für ein Elektro-Installationssystem sind in unterschiedlicher Formgebung, unterschiedlicher Farbgebung und unter Einsatz unterschiedlicher Materialien (z. B. Kunststoff, Edelstahl) verfügbar. Auf diese Weise wird das elektronische Installationsgerät 1 harmonisch in ein Unterputz-Programm integriert und stellt keinen "Fremdkörper" im Hinblick auf Steckdosen, Schalter, Dimmer, Tastsensoren und Bewegungsmelder dar. Des Weiteren kann das elektronische Installationsgerät 1 in Mehrfach-Kombinationen (z. B. 2fach-Kombination, 3fach-Kombination, 4fach-Kombination) zusammen mit Schaltern, Dimmer usw. eingesetzt werden. Ferner ergibt sich eine Vielzahl unterschiedlicher Kombinationsmöglichkeiten, z. B. im Hinblick auf gewünschte Farb-Kombinationen.

Das vorgeschlagene elektronische Installationsgerät 1 lässt sich auf diese Weise mit entsprechenden Lichtschaltern beispielsweise 2er oder 3er Serie kombinieren, wobei die Stromversorgung aus einem Wechselspannungsnetz gesichert und deshalb vergleichsweise sehr einfach zu realisieren ist. Dabei ist es möglich,
- in einem einzigen Gerät mit einem einzigen UP-Gerätesockel sowohl das Bildaufzeichnungs- und Abspeicherungsgerät als auch den Lichtschalter / Taster /Dimmer zu integrieren oder
- das Bildaufzeichnungs- und Abspeicherungsgerät getrennt vom Lichtschalter /Taster / Dimmer zu realisieren.

Die vorgeschlagene Erfindung eignet sich insbesondere zur Erweiterung eines aus der DE 10 2006 016 393 B3 bekannten elektrischen/elektronischen Installationsgerätes mit einem Bewegungsmelder-Mikroprozessor, welcher ausgangsseitig ein Schaltglied für eine Beleuchtungseinrichtung ansteuert, und welcher eingangsseitige Signale einer IR-Detektor/Linsen-Anordnung, eines Tageslichtsensors, einer Zeiteinstellung zur Vorgabe einer Ausschaltverzögerung, einer Dämmerungseinstellung zur Vorgabe eines Lichtwertes, unterhalb dessen das Gerät arbeiten soll und einer manuellen, eine Beleuchtungseinrichtung schaltende Schalteinrichtung empfängt. Die Zeiteinstellung ist wahlweise auf eine unendliche große Ausschaltverzögerung einstellbar, d. h. die Dauer der Ausschaltverzögerung entspricht einer unendlich großen Zeitspanne und die einmal eingeschaltete Beleuchtungseinrichtung bleibt demzufolge auch ohne jede Nachtrigger stets im eingeschalteten Zustand. Des Weiteren ist die Dämmerungseinstellung wahlweise auf einen unendlich kleinen Lichtwert einstellbar, d. h. der Lichtwert, bei dem das Gerät mit der Erfassung der Infrarotstrahlung beginnen soll, entspricht absoluter, in einer natürlichen Umgebung niemals erreichbarer Finsternis und die einmal ausgeschaltete Beleuchtungseinrichtung bleibt demzufolge auch bei sehr großer Finsternis trotz Detektion einer "bewegten" Wärmequelle (Person) stets im ausgeschalteten Zustand. Die Beaufschlagung der manuellen Schalteinrichtung kann durch eine Schaltwippe erfolgen.

Dieses auch als "Komfortschalter" bezeichnete Installationsgerät bietet unterschiedliche "Komfortstufen" und damit vielfältige Möglichkeiten des Schaltens. Es kann vollautomatisch eingesetzt werden und dabei das Licht ein- und wieder ausschalten, wenn eine Person registriert wird (oder nicht). Es kann aber auch halbautomatisch das eingeschaltete Licht so lange anlassen, bis man es per Tastendruck manuell wieder ausschaltet. Sogar als Zeitautomat kann der "Komfortschalter" fungieren. In diesem Fall reagiert er nur auf Tastendruck mit dem Einschalten des Lichts und schaltet später das Licht nach einer definierten Zeit, wenn er keine Anwesenheit mehr registriert, automatisch aus. Außerdem lässt sich der "Komfortschalter" als ganz normaler Schalter benutzen, der ausschließlich auf manuelle Betätigung mit Einschalten / Ausschalten des Lichtes regiert.

Damit kann der "Komfortschalter" zum erfindungsgemäß vorgeschlagenen elektronischen Installationsgerät 1 weiterentwickelt werden, indem er zusätzlich mit einem Kameramodul 10 inklusive Verarbeitungselektronik 9 und Datenspeicher 12 ausgerüstet wird. Die Verarbeitungselektronik 9 kann dabei in den Bewegungsmelder-Mikroprozessor integriert werden. Die Schaltwippe des "Komfortschalters" entspricht dabei der Zentralscheibe 4 mit ihren zusätzlichen Funktionen. Der "Komfortschalter" verfügt über verschiedene Schaltfunktionen und umfasst vorteilhaft insbesondere bereits den Bewegungsmelder 21, durch welchen beispielsweise auch eine Gang- und/oder Flurbeleuchtung ereignisgesteuert (bei Detektion einer Wärmequelle) aktivierbar ist. Wird im entsprechenden Modus die Kameraüberwachungsfunktion zugeschaltet, so wird bei Bewegungsdetektion und Anschalten des Lichtes gleichzeitig auch die Kameraüberwachungsfunktion und Bildaufzeichnung mittels Kameramodul 10 + Verarbeitungselektronik 9 + Datenspeicher 12 gestartet.

Allgemein wird durch Kombination des vorgeschlagenen elektronischen Installationsgerätes 1 mit einem Lichtschalter die Qualität der Bildaufzeichnungen erhöht. Derartige Lichtschalter befinden sich häufig neben Türen und gegenüber von Treppenaufgängen / Treppenabgängen und damit an für die vorgeschlagene Überwachungsfunktion der Kamera geeigneten Positionen.

Eine weitere Anwendungsmöglichkeit des vorgeschlagenen elektronischen Installationsgerätes 1 besteht in der Anbindung an eine Alarmeinrichtung oder ein Alarm- und Störmeldesystem, bei welchem Niederspannungskomponenten wie Überwachungs-Einsätze, optische und akustische Melde-Einsätze, Signal- und Abstelltaster usw. über gebräuchliche Telefon- und Steuerleitungen untereinander verbunden sind.

Bei Integration des vorgeschlagenen Installationsgerätes 1 in ein Bussystem oder in ein Alarm- und Störmeldesystem ist auch eine Anbindung an eine Kommunikationseinrichtung des Bussystems oder des Alarm- und Störmeldesystems realisierbar, welche eine automatische Informationsübermittlung (Senden von Bildaufzeichnungen)
- an den (sich z. B. auf einer Reise befindenden) Wohnungsinhaber und/oder
- an einen Hausmeister eines Gebäudes / Gebäudekomplexes und/oder
- an eine Hausverwaltung eines Gebäudes / Gebäudekomplexes und/oder
- an eine beauftragte Sicherheitsfirma und/oder
- an eine Polizeidienststelle

ermöglicht, beispielsweise über eine eingerichtete Mobilfunkverbindung oder über eine eingerichtete Funkverbindung oder über eine eingerichtete Telefonleitung.

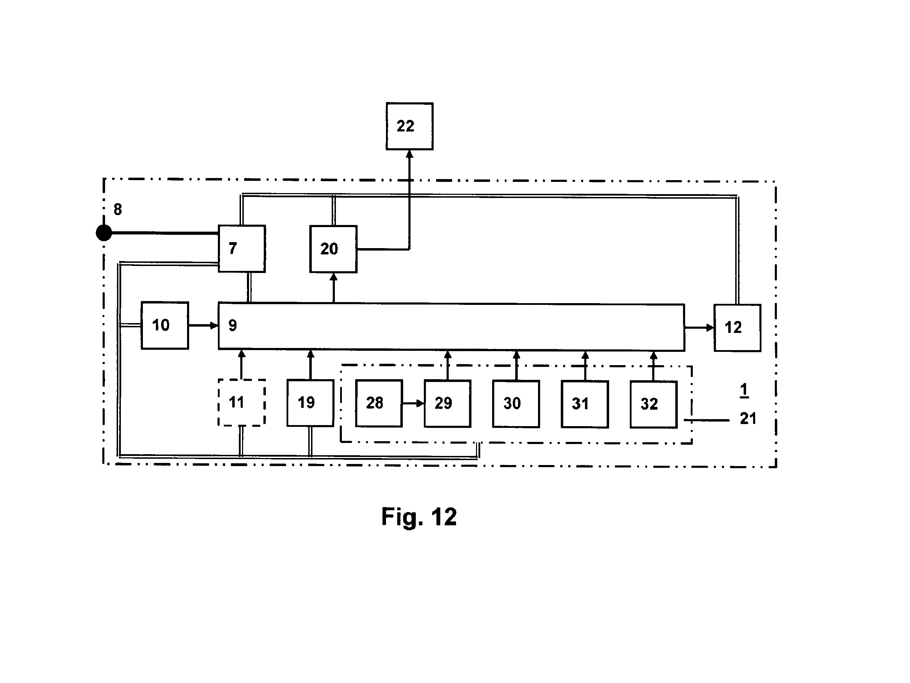

In Fig. 12 ist eine Ausführungsform des elektronischen Installationsgerätes mit Bewegungsmelder dargestellt. Dabei wird der Bewegungsmelder 21 in allgemein bekannter Weise gebildet durch
- eine IR-Detektor/Linsenanordnung 28, welche über einen Verstärker/Filter 29 Bewegungsmeldersignale an die Verarbeitungselektronik 9 abgibt, sobald eine sich bewegende Wärmequelle (Person) detektiert wird,
- einen Tageslichtsensor 30, welcher ein der aktuellen Helligkeit entsprechendes Lichtwertsignal an die Verarbeitungselektronik 9 abgibt,
- eine die Verarbeitungselektronik 9 beaufschlagende Einstelleinrichtung 31 für die Ausschaltverzögerung zur Vorgabe eines Zeitintervalls, mit welchem festgelegt wird, wie lange das Leuchtmittel 22 nach dem Ende der Detektion einer sich bewegenden Wärmequelle im eingeschalteten Zustand verbleiben soll,
- eine die Verarbeitungselektronik 9 beaufschlagende Einstelleinrichtung 32 für den Dämmerungsschalter, mit welcher der Lichtwert festgelegt wird, bei dessen Unterschreiten der Schaltausgang 20 zu aktivieren und dementsprechend das Leuchtmittel 22 einzuschalten ist.

Die Besonderheit der in Fig. 12 gezeigten Ausführungsform des elektronischen Installationsgerätes 1 besteht nun darin,
- dass die Verarbeitungselektronik 9 bei Empfang von Bewegungsmeldersignalen Bildaufzeichnungen im Datenspeicher 12 völlig unabhängig von empfangenen Lichtwertsignalen veranlasst,
- dass die Verarbeitungselektronik 9 bei Empfang von Bewegungsmeldersignalen den Schaltausgang 20 / das Leuchtmittel 22 abhängig von empfangenen Lichtwertsignalen aktiviert.

Mit diesen Maßnahmen werden vorteilhaft bei detektierter Bewegung von Wärmequellen Bildaufzeichnungen veranlasst, welche bei Unterschreitung eines voreingestellten Helligkeitsniveaus (während der Dämmerung und in der Nacht) bei eingeschaltetem Leuchtmittel 22 erfolgen und bei ausreichend großem Helligkeitsniveau (während des Tages) bei ausgeschaltetem Leuchtmittel 22 erfolgen. Diese Überlegungen gelten in gleicher Weise bei der vorstehend behandelten Erweiterung eines aus der DE 10 2006 016 393 B3 bekannten elektrischen/elektronischen Installationsgerätes (welches zusätzlich eine manuelle Schaltbetätigung des Leuchtmittels 22 erlaubt).

Die körperliche Ausbildung der Ausführungsform gemäß Fig. 12 erfolgt vorzugsweise in der gemäß Fig. 7 gezeigten Weise. Das Leuchtmittel 22 ist in Form eines eigenständigen Gerätes (separat vom Installationsgerät 1) ausgeführt.

### Bezugszeichenliste

- 1: elektronisches Unterputz-Installationsgerät
- 2: -
- 3: UP-Gerätesockel (Unterputzeinsatz) inkl. Tragring und Spreizen
- 4: Zentralscheibe
- 5: Abdeckrahmen
- 6: -
- 7: Netzteil
- 8: Anschluss an externe Spannungsversorgung (230V-Wechselspannungsnetz) oder Bussystem (Busspannung), wie PoE, KNX
- 9: Verarbeitungselektronik
- 10: Kameramodul
- 11: Mikrofon
- 12: Datenspeicher
- 13: Speicherkarten-Schreib-/Lesegerät
- 14: Speicherkarte
- 15: USB-Anschluss
- 16: Busanbindung
- 17: Funk-Übertragungseinheit
- 18: IR-Übertragungseinheit
- 19: Einstelleinheit mit mindestens einem Einstellelement (Einschalten, Ausschalten, Zeitvorgaben-Einstellung)
- 20: Schaltausgang (z. B. zum Ansteuern eines internen oder externen IR-Leuchtmittels)
- 21: Bewegungsmelder
- 22: Leuchtmittel, vorzugsweise IR-Leuchtmittel
- 23: -
- 24: Bussystem
- 25: UP-Gerätedose
- 26: Wand
- 27: -
- 28: IR-Detektor/Linsen-Anordnung
- 29: Verstärker/Filter
- 30: Tageslichtsensor
- 31: Einstelleinrichtung für Ausschaltverzögerung
- 32: Einstelleinrichtung für Dämmerungsschalter

## Patentansprüche

1. Bildaufzeichnungs- und Abspeicherungsgerät in Form eines in eine normgerechte UP-Gerätedose montierbaren Unterputz-Installationsgerätes (1) mit UP-Gerätesockel (3), Zentralscheibe (4) sowie Abdeckrahmen (5),
• mit einem Netzteil (7) inklusive Anschluss an eine externe Spannungsversorgung (8),
• mit einer Verarbeitungselektronik (9), an welche ein Kameramodul (10) inklusive einer Optik sowie ein Datenspeicher (12, 13+14) angeschlossen sind,
• wobei das Kameramodul (10) Bildaufzeichnungen der Umgebung des Installationsgerätes (1) für die Abspeicherung im Datenspeicher (12, 13+14) erzeugt.

2. Bildaufzeichnungs- und Abspeicherungsgerät nach Anspruch 1, **dadurch gekennzeichnet, dass** als Datenspeicher ein Speicherkarten-Schreib-/Lesegerät (13) inklusive eingebrachter Speicherkarte (14), vorzugsweise Micro-SD-Karte, eingesetzt ist.

3. Bildaufzeichnungs- und Abspeicherungsgerät nach Anspruch 1, **dadurch gekennzeichnet, dass** ein USB-Anschluss (15) für den Zugriff auf den Datenspeicher (12) vorgesehen ist.

4. Bildaufzeichnungs- und Abspeicherungsgerät nach einem der vorstehenden Ansprüche, **dadurch gekennzeichnet, dass** eine Busanbindung (16) für den Zugriff auf den Datenspeicher (12) vorgesehen ist.

5. Bildaufzeichnungs- und Abspeicherungsgerät nach einem der vorstehenden Ansprüche, **dadurch gekennzeichnet, dass** eine Funk-Übertragungseinheit (17) für den Zugriff auf den Datenspeicher (12) und/oder zur Aktivierung / Desaktivierung einer Bildaufzeichnung vorgesehen ist.

6. Bildaufzeichnungs- und Abspeicherungsgerät nach einem der vorstehenden Ansprüche, **dadurch gekennzeichnet, dass** eine IR-Übertragungseinheit (18) für den Zugriff auf den Datenspeicher (12) und/oder zur Aktivierung / Deaktivierung einer Bildaufzeichnung vorgesehen ist.

7. Bildaufzeichnungs- und Abspeicherungsgerät nach einem der vorstehenden Ansprüche, **dadurch gekennzeichnet, dass** eine Einstelleinheit (19) mit mindestens einem Einstellelement an die Verarbeitungselektronik (9) angeschlossen ist.

8. Bildaufzeichnungs- und Abspeicherungsgerät nach einem der vorstehenden Ansprüche, **dadurch gekennzeichnet, dass** ein Bewegungsmelder (21) an die Verarbeitungselektronik (9) angeschlossen ist.

9. Bildaufzeichnungs- und Abspeicherungsgerät nach einem der vorstehenden Ansprüche, **dadurch gekennzeichnet, dass** ein Schaltausgang (20) an die Verarbeitungselektronik (9) angeschlossen ist.

10. Bildaufzeichnungs- und Abspeicherungsgerät nach Anspruch 10, **dadurch gekennzeichnet, dass** ein Leuchtmittel (22) an den Schaltausgang (20) angeschlossen ist.

11. Bildaufzeichnungs- und Abspeicherungsgerät nach den Ansprüchen 8 - 10, **dadurch gekennzeichnet, dass** bei Detektion einer sich bewegenden Wärmequelle mittels des Bewegungsmelders (21) unabhängig von der aktuellen Helligkeit stets eine Abspeicherung der Bildaufzeichnungen im Datenspeicher (12, 13+14) erfolgt.

12. Bildaufzeichnungs- und Abspeicherungsgerät nach einem der vorstehenden Ansprüche, **dadurch gekennzeichnet, dass** ein Mikrofon (11) an die Verarbeitungselektronik (9) angeschlossen ist.
